# NEW EUROPEAN PATENT SPECIFICATION

(11) **EP 0 206 674 B2**
(45) Date of publication and mention of the opposition decision: **07.07.1993**
(45) Mention of the grant of the patent: 24.01.1990
(21) Application number: 86304533.2
(22) Date of filing: 12.06.1986
(51) Int. Cl.: A23D 7/00, A23D 9/00

(54) **Fat compositions**
Fettzusammensetzungen
Mélanges gras

(30) Priority: 14.06.1985 GB 8515171
(43) Date of publication of application: 30.12.1986
(73) Proprietor: UNILEVER PLC, London EC4P 4BQ (GB); UNILEVER N.V., 3013 AL Rotterdam (NL)
(72) Inventor: Gercama, Anne, Durban (ZA)
(74) Representative: Dries, Antonius Johannes Maria

(56) References cited:
- GB-A- 1 318 849
- US-A- 4 513 501
- The Journal of the American Oil Chemists' Society, vol. 36, August 1959: A.J. Haighton "The Measurement of the Hardness of Margarine and Fats with Cone Penetrometers"

## Description

This invention relates to plastic emulsion food products such as margarine which are particularly intended for culinary purposes and their preparation.

Margarine and related plastic emulsion fat products for culinary purposes for example pastry margarine, are customarily marketed in wrapped blocks of substantial size convenient for transport which must however be broken up before use, for blending with other ingredients into bakery mixes. For bakery purposes margarine is usually substantially harder than table margarine and good deal of effort is expended by the baker in this traditionally manual operation. Individually wrapped sheets of margarine of about 2 cm thickness are more readily broken up but are less convenient to transport being more fragile and machines for their production are expensive and relatively slow in output.

The present invention is based on the discovery that margarine and like emulsion fat products particularly for culinary purposes can be presliced and wrapped together to form a unitary package from which individual slices can be removed as required.

The present invention therefore provides a fat-based culinary product comprising a sliced block of margarine or like plastic emulsion fat product in which individual slices in contact with one another from a unitary package the consistency of which enables individual slices to be readily parted from the package at ambient temperatures, and the block composition displays the following N-values :
N20 : 30-60
N30: 12-40
N35 : 8-30, characterized by the fact that the block is scored peripherally with grooves or rills between adjacent slices to facilitate their separation.

The sliced pastry fat blocks of the present invention may be provided by a simple modification of established extrusion methods for the preparation of margarine, in which the margarine is extruded in a block past cutting wires fixed across the extrusion path of the block and spaced apart, preferably from 1 to 5 cm between them. The cutting installation is preferably installed adjacent the mouthpiece or exit port of the extrusion unit, ensuring that no further pressure is applied by the units to force the slices together and handicap the separation from the package in which they are ultimately wrapped. Preferably also, the margarine is extruded through a unit which is substantially rectangular in cross section but which is furnished with scalloped edges between the walls and adjacent cutting wires, providing each slice of margarine with an indented edge to facilitate its separation form its adjacent neighbours.

A particular advantage of the present invention is that conventional methods of margarine manufacture in which the product is extruded, may be inexpensively adapted to produce these products. Pastry margarine and similarly relatively hard culinary emulsion fat products, are usually produced in a continuous fashion, from aqueous emulsions in the fully-melted fat, which are subjected to rapid chilling and working in scraped-surface heat exchanger units or Votator A units, from which the now-plastic emulsion is discharged into Votator B units constituted by a pipe which may include texturising valve means, in which further crystallisation of the fat in the emulsion occurs and from which the margarine is finally extruded and cut into blocks for wrapping. A cutting frame comprising spaced parallel cutting wires as described or cutting knives can be simply fitted over the extrusion orifice to provide the sliced margarine packs of the present invention is needed, with no further expensive modification, either of the extrusion machinery or the successive wrapping facility, which handles the sliced pack just as readily.

The composition of the margarine orotherfat-based culinary products of the invention may be based on edible fats of any appropriate source, animal, vegetable or marine or mixtures thereof and the fats or oils may be hardened or fractionated or otherwise and processed as customary, as required. For the plastic emulsion food product, a water-in-oil emulsion is prepared, chilled and worked in scraped-surface heat exchangers and rested if required, preferably to complete crystallisation, before blocks of the product, which may be extruded, are sliced. The slicing may be effected by extrusion through a wire grid with suitable wire spacing to give slices of the required thickness, each block being cut to predetermined size before the sliced block is wrapped or otherwise packaged.

Preferably the melting characteristics, expressed as N-values obtained by NMR methods are as follows : N20 30-60, preferably 46-50 ; N30 12-40, preferably 27-32 and N35 8-30, preferably 16-20. The hardness, measured by penetrometer as C-values in accordance with Haighton JAOCS 36 (1959) pp 345 to 348, should preferably be between 800 and 3500, more particularly 1500 and 3500. A suitable composition comprises for example, a mixture preferably in equal parts, of palm oil with selectively hardened palm oil having a slip melting point of 40-50°C, the mixture being blended with a minor amount of sunflower or other high PUFA oil. Palm stearine fraction from palm oil may be used instead of or in addition to hardened palm oil as the hardstock fat, which may also include hardened fish oil.

Preferably the slices constituting the packs of the present invention are between 10 and 100 mm thick, preferably from 20 to 30 mm thick. Blocks may be formed with any number, but preferably for convenience blocks of 3 or4 slices are preferred. The packaged block, with or without intermediate wrapping with parchment or other grease proof materials, is preferably arranged with the slices upright, to ensure that the pressure of stacking for example on palettes, is transverse to the slices and does not therefore tend to press adjacent slices together. The cross-sectional shape and size of the block are not critical. It may be rounded or rectangular in section, preferably at least 5 cm across, more preferably less than 25 cm and especially rectangular blocks having sides from 7 cm to 30 cm in length. The block is scored with peripheral grooves or rills at intervals along the block over adjacent slices to facilitate their separation by hand as required.

### Example

A blend of equal parts defined and neutralised palm oil and palm oil hardened selectively to 44 °C slip melting point, was blended in the ratio 9 : 1 with sunflower oil. The completely molten fat mixture was blended with customary emulsifier and colouring agents and an aqueous phase containing salt and stabilising agents was emulsified into a continuous stream of the molten fat composition through a proportionating pump feeding scraped-surface heat exchanger VotatorAunits discharging into B units. From the B units the now-plastic emulsion was extruded through a rectangular orifice approximately 10 by 20 cm furnished with three fixed, equidistant cutting wires stretched across the orifice at approximately 2.5 cm apart. The walls of the extrusion tube extending to the orifice were scalloped inwardly between the wires and the walls to facilitate separation of the extruded super-imposed slices. In another embodiment the extruded block was also cut into 4 slices, each 18 x 30 cm.

The slip melting point of the margarine fat was 38 °C, N values were N20 46-50 ; N30 27-32 ; N35 16-20. Hardness values from C10 to C30 were between 1500 and 3500 ; the extruded, super-imposed slices were cut at intervals of 30 cm and the resulting blocks were wrapped mechanically in parchment before being packaged in fibre cartons.

In use the slices were readily separated from one another, even at ambient temperatures of 20/25 °C and excellent pastry products were made from conventional recipes including appropriate quantities of the sliced margarine, kneaded into the other ingredients of the recipe.

## Claims

1. A fat-based culinary product comprising a sliced block of margarine or like plastic emulsion- fat product comprising individual slices in contact with one another as a unitary package whereas the consistency of the fat enables individual slices to be readily parted from the package at ambient temperatures and the block-composition displays the following N-values:
N20:30-60
N30:12-40
N35:8-30, characterised by the fact that the block is scored peripherally with grooves or rills between adjacent slices to facilitate their separation.

2. A product according to Claim 1 which comprises margarine or other plastic emulsion food product.

3. A product according to Claim 1 or 2 wherein slices are from 10 to 100 mm thickness.

4. A product according to any of the preceding claims where the block is at least 5 cm across.

5. A product according to Claim 4 wherein the block is rectangular in section.

6. A product according to Claim 5 wherein each side of the block is 5 cm to 25 cm in length.

7. A product according to Claim 1 wherein the consistency of the block is:
N20:46-50
N30:27-32
N35:16-20

8. A product according to any of the preceding claims wherein the hardness of the block is from 800 to 3500 by the C-value method.

9. A product according to Claim 8 wherein the hardness is from 1500 to 3500.

10. A product according to any of the preceding claims wherein the fat comprises blend of a liquid vegetable oil and palm fat at least part of which is selectively hardened and/or a stearine fraction of palm oil.

11. A product according to Claim 10wherein the palm fat comprises substantially equal parts of selectively hardened and unhardened palm oil .

12. A product according to any of the preceding claims wherein the fat comprises hardened fish oil.

13. A product according to any of the preceding claims wherein the fat comprises at least 1/9th liquid oil.

14. A product according to claim 13 wherein the fat comprises up to 1/3rd liquid oil.

15. A product according to any of the preceding claims wherein the fat is substantially completely crystallised.

16. A process for the preparation of a product as claimed in any of the preceding claims comprising preparing a water-in-oil emulsion from a blend of substantially equal parts of hardened and unhardened palm oil with a liquid vegetable oil, chilling, working and if necessary resting the plastic emulsion product obtained until crystallisation is substantially complete, slicing and wrapping the plastic emulsion product obtained in predetermined lengths, each providing a unitary package in which slices are in contact with one another and are readily separable, the block being scored peripherally at intervals between the slices to facilitate their separation in use.

## Patentansprüche

1. Produkt auf Fettbasis für Kochzwecke, umfassend einen in Stücke geschnittenen Block aus Margarine oder einem ähnlichen plastischen Emulsionsfettprodukt, in welchem die einzelnen miteinander in Kontakt stehenden Stücke eine Einzelpackung bilden, während es die Konsistenz des Fettes erlaubt, daß einzelne Stücke bei Umgebungstemperaturen leicht aus der Packung herausgenommen werden können und die Blockzusammensetzung die folgenden N-Werte zeigt:
N20: 30-60
N30: 12-40
N35: 8-30,
dadurch gekennzeichnet, daß der Block peripher mit Einkerbungen oder Rillen zwischen benachbarten Stücken gekerbt ist, um deren Trennung zu erleichtern.

2. Produkt nach Anspruch 1, das Margarine oder ein anderes plastisches Emulsionsnahrungsprodukt umfaßt.

3. Produkt nach Anspruch 1 oder 2, worin die Stücke eine Dicke von 10 bis 100 mm aufweisen.

4. Produkt nach irgendeinem der vorhergehenden Ansprüche, worin der Block mindestens 5 cm Durchmesser hat.

5. Produkt nach Anspruch 4, worin der Block eine rechteckige Konfiguration aufweist.

6. Produkt nach Anspruch 5, worin jede Seite des Blockes eine Länge von 5 bis 25 cm aufweist.

7. Produkt nach Anspruch 1, worin die Konsistenz des Blockes
N20: 46-50
N30: 27-32
N35: 16-20
beträgt.

8. Produkt nach irgendeinem der vorhergehenden Ansprüche, worin die Härte des Blockes nach der C-Wert-Methode 800 bis 3500 beträgt.

9. Produkt nach Anspruch 8, worin die Härte 1500 bis 3500 beträgt.

10. Produkt nach irgendeinem der vorhergehenden Ansprüche, worin das Fett ein Gemisch aus einem flüssigen Pflanzenöl und Palmfett, von welchem mindestens ein Teil selektiv gehärtet ist, und/odereine Stearinfraktion von Palmöl umfaßt.

11. Produkt nach Anspruch 10, worin das Palmfett im wesentlichen gleiche Teile von selektiv gehärtetem und ungehärtetem Palmöl umfaßt.

12. Produkt nach irgendeinem der vorhergehenden Ansprüche, worin das Fett gehärtetes Fischöl umfaßt.

13. Produkt nach irgendeinem der vorhergehenden Ansprüche, worin das Fett mindestens ein Neuntel flüssiges Öl umfaßt.

14. Produkt nach Anspruch 13, worin das Fett bis zu einem Drittel flüssiges Öl umfaßt.

15. Produkt nach irgendeinem der vorhergehenden Ansprüche, worin das Fett im wesentlichen vollständig kristallisiert ist.

16. Verfahren zur Herstellung eines Produktes gemäß irgendeinem der vorhergehenden Ansprüche, das die Herstellung einer Wasser-in-ÖI-Emulsion aus einem Gemisch aus im wesentlichen gleichen Teilen gehärtetem und ungehärtetem Palmöl mit einem flüssigen Pflanzenöl, Abkühlen, Bearbeiten und, falls notwendig, Ruhenlassen des erhaltenen plastischen Emulsionsproduktes, bis die Kristallisation im wesentlichen beendet ist, das Zerschneiden in Stücke und Einwickeln des plastischen, in vorherbestimmten Längen erhaltenen Emulsionsproduktes umfaßt, wodurch jeweils eine Einzelpackung geschaffen wird, in welcherdie Stücke miteinander in Kontakt stehen und leicht trennbar sind, wobei jeder Block peripher in Abständen zwischen den Stücken gekerbt ist, um deren Trennung bei der Verwendung zu erleichtern.

## Revendications

1. Produit culinaire à base de graisse comprenant un bloc de margarine ou d'un produit gras en émulsion plastique découpé en tranches comprenant des tranches individuelles en contact les unes avec les autres sous forme d'un paquet unitaire, tandis que la consistance de la graisse permet de séparer aisément les tranches individuelles du paquet aux températures ambiantes et la composition du bloc possède les valeurs N ci-après :
N 20 = 30-60
N 30 = 12 -40
N 35 = 8 - 30 ,
caractérisé en ce que le bloc est entaillé sur le plan périphérique avec des rainures ou des entailles entre les tranches adjacentes en vue d'en faciliter la séparation.

2. Produit selon la revendication 1, qui comprend de la margarine ou un autre produit alimentaire en émulsion plastique.

3. Produit selon la revendication 1 ou 2, dans lequel les tranches ont de 10 à 100 mm d'épaisseur.

4. Produit selon l'une quelconque des revendications précédentes, dans lequel le bloc présente une dimension transversale d'au moins 5 cm.

5. Produit selon la revendication 4, dans lequel le bloc est rectangulaire en coupe.

6. Produit selon la revendication 5, dans lequel chaque côté du bloc présente une longueur de 5 à 25 cm.

7. Produit selon la revendication 1, dans lequel la consistance du bloc est :
N 20 : 46-50
N 30 : 27-32
N 35 : 16-20.

8. Produit selon l'une quelconque des revendications précédentes, dans lequel la dureté du bloc est comprise entre 800 et 3500 par le procédé de valeur C.

9. Produit selon la revendication 8, dans lequel la dureté est comprise entre 1500 et 3500.

10. Produit selon l'une quelconque des revendications précédentes, dans lequel la graisse comprend un mélange d'huile végétale liquide et de graisse de palme dont une partie au moins a été sélectivement durcie et/ou une fraction stéarine de l'huile de palme.

11. Produit selon la revendication 10, dans lequel la graisse de palme comprend des parties sensiblement égales d'huile de palme sélectivement durcie et non durcie.

12. Produit selon l'une quelconque des revendications précédentes, dans lequel la graisse comprend de l'huile de poisson durcie.

13. Produit selon l'une quelconque des revendications précédentes, dans lequel la graisse comprend au moins 1/9ème d'huile liquide.

14. Produit selon la revendication 13, dans lequel la graisse comprend jusqu'à un tiers d'huile liquide.

15. Produit selon l'une quelconque des revendications précédentes, dans lequel la graisse est à peu près entièrement cristallisée.

16. Procédé de préparation d'un produit selon l'une quelconque des revendications précédentes, qui consiste à préparer une émulsion eau-dans-huile à partir d'un mélange de parties sensiblement égales d'huile de palme durcie et non durcie avec une huile végétale liquide; à refroidir, à travailler et, éventuellement, à laisser au repos le produit d'émulsion plastique qu'on obtient jusqu'à l'achèvement pratiquement complet de la cristallisation ; à découper en tranches et à envelopper le produit d'émulsion plastique obtenu en des longueurs prédéterminées dont chacune constitue un paquet unitaire dans lequel les tranches sont en contact les unes avec les autres et sont aisément séparables, le bloc étant entaillé sur le mode périphérique à intervalles entre les tranches pour en faciliter la séparation en utilisation.
